# EUROPÄISCHE PATENTSCHRIFT

(11) **EP 0 666 001 B1**
(45) Veröffentlichungstag und Bekanntmachung des Hinweises auf die Patenterteilung: **20.05.1998**
(21) Anmeldenummer: 93922489.5
(22) Anmeldetag: 12.10.1993
(51) Int. Cl.: H04B 7/08, H04L 1/06

(54) **VERFAHREN UND ANORDNUNG ZUR ANTENNENAUSWAHL-DIVERSITY IN EINER EMPFANGSEINRICHTUNG EINES SCHNURLOSEN TELEFONSYSTEMS**
PROCESS AND ARRANGEMENT FOR ANTENNA DIVERSITY SELECTION IN THE RECEIVING DEVICE OF A CORDLESS TELEPHONE SYSTEM
PROCEDE ET AGENCEMENT PERMETTANT LA SELECTION EN DIVERSITE D'UNE ANTENNE DANS UN DISPOSITIF DE RECEPTION D'UN SYSTEME TELEPHONIQUE SANS FIL

(30) Priorität: 26.10.1992 DE 4236134
(43) Veröffentlichungstag der Anmeldung: 09.08.1995
(73) Patentinhaber: SIEMENS AKTIENGESELLSCHAFT, 80333 München (DE)
(72) Erfinder: EUSCHER, Christoph, D-46414 Rhede (DE); PILLEKAMP, Klaus-Dieter, D-40699 Erkrath (DE)
(86) Internationale Anmeldenummer: DE9300964
(87) Internationale Veröffentlichungsnummer: WO9410762

(56) Entgegenhaltungen:
- PROCEEDINGS OF GLOBECOM 90 2-5 December 1990, NEW YORK (US) pages 1013-1017; L.B.LOPES "ON THE RADIO LINK PERFORMANCE OF THE DIGITAL EUROPEAN CORDLESS (DECT) SYSTEM"
- PROCEEDINGS OF 1991 INTERNATIONAL CONFERENCE ON COMMUNICATIONS - ICC 91 23-26 June 1991, NEW YORK (US) pages 1480-1484; Y.YAMAO & Y.NAGAO: "PREDICTIVE ANTENNA SELECTION DIVERSITY (PASD) FOR TDMA MOBILE RADIO"
- PATENT ABSTRACTS OF JAPAN vol. 011, no. 231 (E-527)28. Juli 1987 & JP,A,62 047 222 (NEC) 28. Februar 1987

## Beschreibung

Die Erfindung betrifft ein Verfahren zur Antennenauswahlsteuerung in einer Funkempfangseinrichtung gemäß dem Oberbegriff des Patentanspruches 1 und eine Anordnung zur Antennenauswahlsteuerung in einer Funkempfangseinrichtung gemäß dem Oberbegriff des Patentanspruches 8.

Bei Hochfrequenz-Nachrichtenübertragungen im Gigahertzbereich sind die Übertragungsverhältnisse aufgrund der Ausbreitungseigenschaften innerhalb eines kleinen räumlichen Bereichs (Zentimeterbereich) häufig sehr verschieden. Dies hat zur Folge, daß bei bewegten Systemen selbst bei kleinen Geschwindigkeiten um beispielsweise 1 m/s die Übertragungsverhältnisse zeitlich stark schwanken. Um während der Bewegung auch in Bereichen mit schlechten Übertragungsbedingungen eine möglichst gute Übertragung zu erreichen, wird an der Basisstation des Systems eine zweite, räumlich versetzte Antenne installiert, die aufgrund der räumlichen Trennung andere Übertragungsverhältnisse liefert und auf die in diesem Fall umgeschaltet werden kann (Antenna Diversity). Eine solche Antennenansteuerung ist grundsätzlich im "Digital European Cordless Telecommunications System" (DECT) Standard vorgesehen (draft prETS 300 175-3: 1991, page 183/184). Dabei ist eine Antennenumschaltung aufgrund der Empfangsqualität in den folgenden Fällen vorgesehen:
a) Ergebnisse der A- und X-CRC;
b) Bedingungen des S- und Z-Feldes;
c) Radiosignalstärke; und
d) andere geeignete Parameter.

Aus der europäischen Patentanmeldung EP 0 213 780 A2 (Anm.-Nr.: 86306015.8) ist bereits ein als "burst-mode two-way communications system" bekannt. Das bekannte System weist anders als die erfindungsgemäße Anordnung eine Mehrzahl von Sende-/Empfangseinrichtungen mit jeweils einer Schwellwertanordnung auf, die mit einem Schaltelement zur Umschaltung auf eine von zwei Antennen verbunden sind. Die Schwellwertanordnungen realisieren einen vorgeschriebenen absoluten Schwellwert (Seite 3, Spalte 3, Zeilen 55/56). Der Schwellwert soll jedoch auch von außen durch Software einstellbar und damit optimierbar sein, wobei es in der veröffentlichten europäischen Patentanmeldung offen bleibt, wie eine solche Einstellung und Optimierung zu erfolgen hätte (Spalte 3, Zeilen 57/58; Spalte 4, Zeile 41). Insbesondere bleibt auch offen, ob eine solche Optimierung durch eine einmalige Einstellung des Schwellwerts z.B. bei der Herstellung oder bei der Erstinbetriebnahme des Geräts oder auch im laufenden Betrieb erfolgt. Offenbar ist nur eine einmalige Einstellung des Schwellwerts vorgesehen, nachdem in der europäischen Patentanmeldung ausgeführt wird, daß in der Praxis der Schwellwert demjenigen Wert entspricht, bei dem gerade noch ein ausreichender Empfang erfolgt ("worst-case service"), im allgemeinen 15 dB unterhalb einer durchschnittlichen Feldstärke bei maximaler Entfernung (Spalte 4, Zeilen 41-46).

Bei dem bekannten System werden Feldstärkeeinbrüche (signal fade) anhand einer schnellen Änderungsrate (rapid rate of change) der Empfangsfeldstärke erkannt, wobei dieser Parameter mit über mehrere Zeitperioden gemittelten Werten verglichen wird (Spalte 4, Zeilen 47-56). Die dabei vorgesehene Mittelwertbildung erfordert allerdings erheblichen Rechenaufwand und entsprechende Rechenzeit. Eine Änderung des Schwellwertes bei steigenden Feldstärkewerten ist bei dem bekannten System nicht vorgesehen.

Enthalten entsprechende Systeme zwar zwei Antennen, jedoch nur einen Empfänger, so besteht für die Steuerung der Antennenumschaltung ein erhebliches Problem darin, daß die Qualität der auf beiden Antennen empfangenen Signale nicht gleichzeitig gemessen werden können. Um zu entscheiden, auf welcher Antenne Signale einer besseren Empfangsqualität empfangen werden können, müssen die Messungen nacheinander durchgeführt werden. Dabei ergibt sich zum einen die Schwierigkeit, daß eine Messung auf einer Antenne mit dem Empfang eines Bursts auf dieser Antenne verbunden ist und daß das Meßergebnis "Empfangsqualität schlecht" zu einem Datenverlust führen kann. Zum anderen besteht ein weiteres Problem darin, daß das Meßergebnis je nach Bewegungsgeschwindigkeit der eigentlichen Einrichtung bzw. einer korrespondierenden Einrichtung, mit der eine Funkverbindung besteht, und der Burstrate nur für wenige Bursts gültig ist. Eine weitere Schwierigkeit besteht darin, daß die Empfangsverhältnisse hinsichtlich beider Antennen nicht korrelieren, so daß die Wahl des Umschaltzeitpunkts erschwert wird.

Aus der Druckschrift: Proceedings of Globecom. '90, 2. bis 5. Dezember 1990, New York (US), Seiten 1013 bis 1017; L. B. Lopes mit dem Titel "On the radio link performance of the digital European cordless telecommunications (DECT) system" ist eine Struktur eines simulierten DECT-Empfängers bekannt, bei dem durch ein feldstärkemessungsgesteuertes Antenna Diversity die Versorgung (Reichweite) und die Kapazität von DECT-Schnurlos-Telefonen verbessert wird.

Aus der Druckschrift: Patent Abstracts of Japan, Band 011, Nr. 231, 28. Juli 1987 in Verbindung mit der JP-A-62047222 ist ein Antenna Diversity Empfänger bekannt, bei dem der Antenna Diversity Effekt dadurch verbessert wird, daß eine Antenna Diversity-Schaltschwelle in Abhängigkeit von Feldstärkeänderungen des Empfangssignals geändert wird. Dazu wird zunächst ein erster an einer ersten Antenne gemessener Feldstärkewert mit einem gespeicherten Schwellwert verglichen. Ist bei diesem Vergleich der gemessene Feldstärkewert kleiner als der gespeicherte Schwellwert, so wird eine zweite Antenne aktiviert. Ist der gemessene Feldstärkewert jedoch größer als oder gleich dem gespeicherten Schwellwert, so bleibt die erste Antenne weiterhin aktiviert. Im Fall der Antennenumschaltung wird zugleich der bisher gespeicherte Schwellwert durch den gemessenen Feldstärkewert ersetzt. Dadurch wird erreicht, daß bei einer allmählichen Verkleinerung des Feldstärkewertes auch der Schwellwert kontinuierlich abgesenkt wird. Der Antenna Diversity-Empfänger ist weiterhin derart ausgebildet, daß dann, wenn der gemessene Feldstärkewert um einen gewissen Wert den gespeicherten Schwellwert übersteigt, der bis dahin gespeicherte Schwellwert durch den gemessenen Feldstärkewert aktualisiert wird.

Ausgehend von diesem Stand der Technik liegt der Erfindung die Aufgabe zugrunde, ein Verfahren und eine Anordnung der eingangs genannten Art anzugeben, das bzw. die aufgrund einer gezielten Ansteuerung der Antennen die jeweils bestmögliche Empfangsqualität für unterschiedliche Empfangsverhältnisse an der betreffenden Funkempfangseinrichtung, insbesondere der Basisstation eines Schnurlostelefons, bereitstellt.

Diese Aufgabe wird ausgehend von dem im Oberbegriff des Patentanspruches 1 definierten Verfahren durch die im kennzeichnenden Teil des Patentanspruches 1, und ausgehend von dem im Oberbegriff des Patentanspruches 5 definierten Verfahren durch den kennzeichnenden Teil des Patentanspruches 5 angegebenen Merkmale gelöst.

Außerdem wird diese Aufgabe ausgehend von der im Oberbegriff des Patentanspruchs 6 definierten Anordnung durch im kennzeichnenden Teil des Patentanspruchs 6 und ausgehend von der im Oberbegriff des Patentanspruches 7 definierten Anordnung durch die im kennzeichnenden Teil des Patentanspruches 7 angegebenen Merkmale gelöst.

Die Erfindung gemäß der Patentansprüche 1, 5, 6 und 7 zeichnet sich jeweils durch den Vorteil aus, daß Bereiche mit relativ ungünstigen Übertragungsverhältnissen erkannt werden, bevor sich die Übertragungsverhältnisse in einem solchen Umfang verschlechtern, daß es zu Übertragungsfehlern kommt.

Gemäß der Ansprüche 1 und 6 wird die gerade aktivierte Antenne bei steigenden oder konstant bleibenden Feldstärkewerten nicht gewechselt, obwohl nicht auszuschließen ist, daß die Empfangssignalqualität auf der gerade nicht aktivierten Antenne bessser ist als auf der gerade aktivierten Antenne. Mit dieser Maßnahme wird aber die Rechnerkapazität der Anordnung relativ gering gehalten.

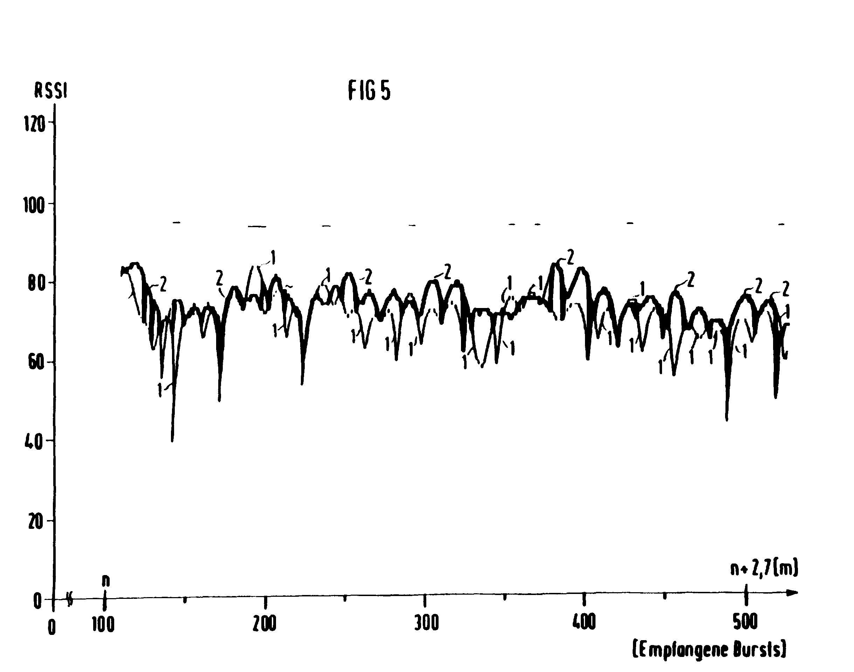

Als wesentlich für die Erfindungen gemäß der Ansürüche 1, 5, 6 und 7 ist die besondere Steuerung der Schwellwerte anzusehen, die den Antennenumschaltungen zugrundegelegt werden. Durch diese Schwellwertsteuerungsprozeduren wird in der weitaus überwiegenden Zahl der Fälle gewährleistet, daß die Antenne mit der jeweils günstigeren Empfangsqualität aktiviert wird (vgl. Figur 5), wobei aber der Aufwand für die Aktualisierung der Schwellwertsteuerungsprozeduren relativ gering gehalten wird.

Diese Ausführungsform zeichnet sich weiterhin durch eine Mehrzahl von Vorteilen aus. Zunächst besteht ein wesentlicher Vorteil darin, daß die erfindungsgemäße Bildung der Schwellwerte aus Feldstärkemeßwerten unabhängig von einer (über mehrere Zeiträume) durchschnittlichen Feldstärke erfolgt. Eine solche durchschnittliche Feldstärke weist hohe Werte bei einer kleinen Distanz zwischen einer Funksende- und einer Funkempfangseinheit auf, während die durchschnittliche Feldstärke bei einer großen Distanz zwischen Funksende- und Funkempfangseinrichtung geringe Werte aufweisen würde. Erfindungsgemäß werden die Schwellwerte und damit die beiden Antennen der Empfangseinrichtung unabhängig von der Distanz zwischen Funksende- und Funkempfangseinrichtung gebildet.

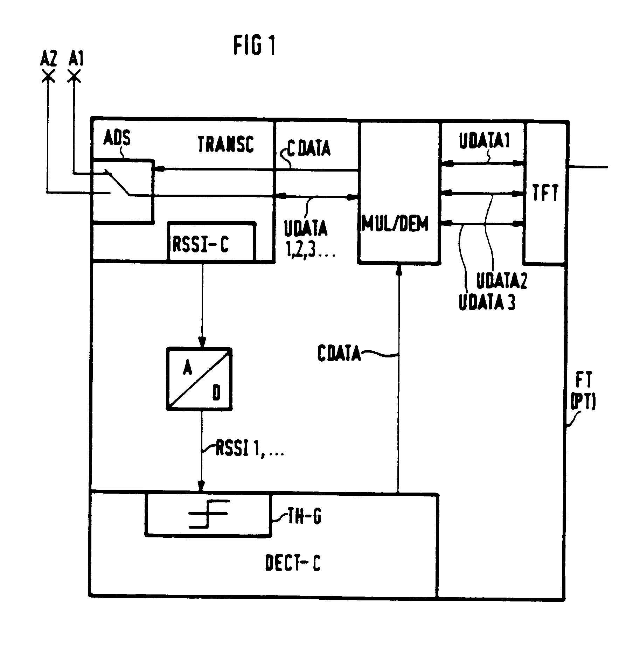

Weiterhin erfolgt die Bildung der Schwellwerte und damit die Ansteuerung der beiden Antennen unabhängig von Bauteiletoleranzen der Feldstärkemeßeinrichtung (RSSI-C, Fig. 1) sowie von temperaturabhängigem Verhalten der Komponenten in der erfindungsgemäßen Anordnung. Schließlich erübrigt es sich, die Feldstärkemeßeinrichtung zu eichen bzw. abzugleichen, da die Anordnung nicht abhängig von absoluten Feldstärkewerten arbeitet, sondern gemessene Feldstärkewerte in Bezug zueinander setzt.

Die Ausführungsform nach Patentanspruch 4 zeichnet sich durch den Vorteil aus, daß bei der Festlegung des Schwellwertes der zeitliche Verlauf der Feldstärke über zwei aufeinanderfolgende Zeiträume berücksichtigt wird.

Vorteilhafte Ausführungsformen der Erfindung sind in den Unteransprüchen gekennzeichnet.

Die Erfindung wird nun in einem zum Verständnis erforderlichen Umfang anhand der Zeichnungen beschrieben.

Es zeigt
- Fig. 1: eine Funkempfangseinrichtung mit zwei Antennen, die nach dem erfindungsgemäßen Verfahren aktiviert werden;
- Fig. 2: ein Flußdiagramm des erfindungsgemäßen Verfahrens,
- Fig. 3: ein Diagramm, das die Zuordnung der Zeiträume veranschaulicht, in denen Feldstärkewerte gemessen und Schwellwerte gebildet werden;
- Fig. 4: den zeitlichen Verlauf empfangener Signale mit aus Feldstärkemeßpunkten gebildeten Schwellwerten und Darstellungen von Antennenwechseln und
- Fig. 5: den Wirkungsgrad des erfindungsgemäßen Verfahrens.

Die in Fig. 1 dargestellte Funkempfangseinrichtung wird beispielsweise durch die Basisstation FT eines schnurlosen Telefons gebildet. Dabei wird bei der folgenden Beschreibung davon ausgegangen, daß für das Schnurlostelefon der DECT-Standard implementiert ist. Hierauf ist die Erfindung jedoch nicht eingeschränkt. Die Funkempfangseinrichtung weist unter anderem ein Empfangsteil mit zwei Empfangsantennen A1 und A2 auf. Zusätzlich kann in der Basisstation FT des schnurlosen Telefons eine Funksendeeinrichtung vorgesehen sein, die mit der Funkempfangseinrichtung verbunden ist. Die Funksendeeinrichtung weist unter anderem ein Sendeteil auf, das ebenfalls mit den Antennen A1 und A2 verbunden ist. Die Antennen A1, A2 fungieren in diesem Fall als Sendeantennen. Das Sende-/Empfangsteil ist in Fig. 1 mit "TRANSC" bezeichnet.

In das Sende-/Empfangsteil TRANSC ist zunächst ein Schaltelement ADS (Antenna Diversity Switch) integriert, welches von Steuerdaten CDATA gesteuert wird, die ein Prozessor DECT-C - wie noch beschrieben wird - bildet und beispielsweise über eine Multiplex-/Demultiplexeinheit MUL/DEM der Sende-/Empfangseinrichtung TRANSC zuführt.

Als Prozessor DECT-C kann ein programmierbarer Mikroprozessor oder eine Hardwarestruktur verwendet werden, die beispielsweise Latches zur Zwischenspeicherung gebildeter Feldstärke - und/oder Schwellwerte und Komparatoren zum Vergleich verschiedener Werte aufweist. Im weiteren bezeichnet DECT-C beide Ausgestaltungen.

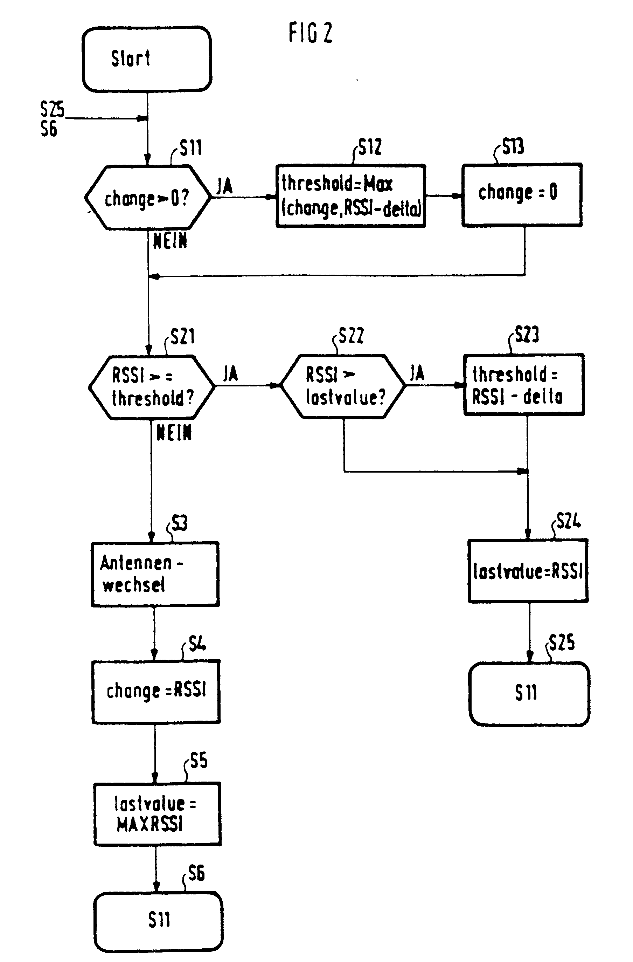

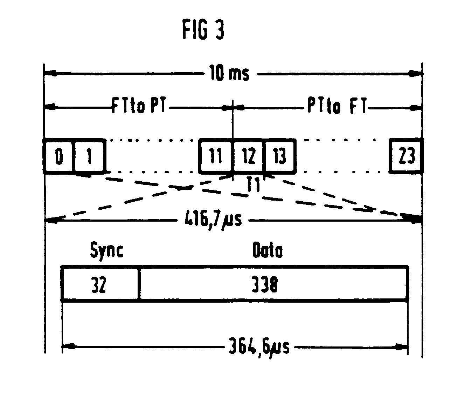

In dem Sende-/Empfangsteil TRANSC ist ferner eine Einrichtung RSSI-C integriert, die die Feldstärke empfangener Signale mißt. Diese Einrichtung RSSI-C dient allgemein der Prüfung, ob ein Kanal belegt ist (vgl. DECT-draft prETS, 175-3:1991, page 164). Die Vorschrift, wie die Feldstärke zu messen ist, wird im DECT-Standard angegeben (vgl. DECT-draft prETS 300 175-2:1991 page 31,6.2 und page 38,8.3). Die Kanalbelegung wird durch das Messen der Feldstärke (Mindestfeldstärke) empfangener Signale festgestellt. Im Rahmen des erfindungsgemäßen Verfahrens übernimmt die Einheit RSSI-C eine weitere Funktion, nämlich die Messung der Feldstärke empfangener Signale, wobei die Meßergebnisse dem Prozessor DECT-C über einen Analog/Digitalwandler A/D zugeführt werden und von dem Prozessor zur Bildung der Steuerdaten CDATA und zur Steuerung des im Prozessor DECT-C integrierten Schwellwertgenerators TH-G verwendet werden. Der Schwellwertgenerator TH-G bildet im laufenden Betrieb fortwährend aktualisierte Werte (TH in den Figuren 2 und 3), wobei gegenüber jeweils einem vorliegenden Wert ein unterschiedlicher (höherer oder niedrigerer) oder ein gleicher Wert gebildet wird. Die Bildung der Schwellwerte erfolgt in Abhängigkeit von den in aufeinanderfolgenden Zeiträumen gemessenen Feldstärkewerten (RSSI in den Figuren 2 und 3) unter Mitwirkung der Einheit RSSI-C und des Prozessors DECT-C.

Die Multiplex-/Demultiplexeinheit MUL/DEM erzeugt bzw. empfängt beispielsweise 1,152 Mbit/s-Daten im DECT-Burst-Format und ordnet empfangenen bzw. zu sendenden Datenpaketen bis zu beispielsweise sechs internen bzw. drei externen Telefonverbindungen im Zeitlagegetrenntverfahren (Time Division Multiple Access TDMA) zu.

Der Einrichtung MUL/DEM sind Codier-/Decodiereinrichtungen ADPCM integriert, denen interne Teilnehmerschaltungen bzw. Amts- oder Nebenstellenanlagenschaltungen nachgeschaltet sind. Diese der Einrichtung MUL/DEM nachgeschalteten Einrichtungen bilden ein Telefonteil TFT, das im übrigen in gleicher Weise aufgebaut sein kann wie die Telefonleitungsteile bekannter Schnurlostelefon-Systeme (Wolf, Klaus: "Auch ohne Schnur "auf Draht"" ,telcom report 10, 1987), Heft 2, Seiten 130 ff. (134).

Es ist darauf hinzuweisen, daß die anhand von Fig. 1 beschriebene Funkempfangseinrichtung nur ein (Sende-/) Empfangsteil TRANSC und damit nur eine Einrichtung RSSI-C zur Messung der Feldstärkewerte aufweist. Ebenso weist die anhand von Fig. 1 beschriebene Funkempfangseinrichtung nur einen Schwellwertgenerator TH-G auf. Damit läßt sich die Qualität der auf beiden Antenen A1,A2 empfangenen Signale nicht gleichzeitig messen.

Sofern die in Figur 1 dargestellte Funkempfangseinrichtung ein Mobilteil PT eines schnurlosen Telefons mit mehreren Antennen darstellt, so kann der Funktionsblock TFT durch die Komponenten gebildet werden, die im Mobilteil unabhängig von dem erfindungsgemäßen Verfahren arbeiten (vgl. "Mikrophon, Akkumulatoren, Kennungskontakt, LED-Anzeige, Tastenfeld 4x5, Klappenschalter, Ruforgan, Hörkapsel", telcom report 10 (1987), Heft 2, Seite 135).

Das erfindungsgemäße Verfahren wird nun anhand des in Fig. 2 dargestellten Flußdiagramms beschrieben. In einem ersten Verfahrensschritt S 11 wird geprüft, ob ein Wert "change" größer 0 ist. Es werden in diesem Zusammenhang zwei Fälle unterschieden: 1. "change" = 0, wenn vor dem Schritt S11 die Antenne nicht gewechselt wurde; 2. "change" erhält für den Fall eines Antennenwechsels den Feldstärkewert zugewiesen, der als letzter Feldstärkewert auf der ursprünglich aktivierten Antenne also vor dem Antennenwechsel gemessen wurde.

Bei der Initialisierung des Verfahrens hat "change" den Wert 0, so daß der Schritt S21 folgt.

Hat "change" jedoch einen Wert ungleich 0 (die Antenne wurde vor dem Schritt S11 gewechselt) folgt Schritt S12. Dem vom Schwellwertgenerator TH-G gebildeten Schwellwert "threshold" wird der Wert (MAX (change, RSSI-delta)) zugewiesen, wobei "RSSI" den ersten auf der neuen Antenne gemessenen Feldstärkewert bezeichnet. Im nächsten Schritt S13 wird "change" der Wert = 0 zugewiesen. Im folgenden Schritt S21 wird geprüft, ob der gerade gemessene Feldstärkewert RSSI größer oder gleich dem vorliegenden Schwellwert ist. Bei der Initialisierung des Systems (Schritte S11,S21) hat der Schwellwert den Wert 0; ansonsten nimmt der Schwellwert den in Schritt S12 zugewiesenen Wert an oder er hat den im vorangegangenen Ablauf im Schritt S23 zugewiesenen Wert.

Ergibt sich bei der Abfrage in Schritt S21 ein positives Ergebnis (der aktuelle Feldstärkewert liegt über dem Schwellwert bzw. ist gleich dem Schwellwert), wird im Schritt S22 geprüft ob der aktuelle Feldstärkewert größer ist als der zuvor gemessene und zwischengespeicherte Feldstärkewert ("last value"). Bei einem positiven Ergebnis dieser Überprüfung (der neue Feldstärkewert ist größer als der alte Feldstärkewert) wird in Schritt S23 dem Schwellwert "threshold" ein neuer Wert zugewiesen, der gleich dem aktuellen Feldstärkewert abzüglich eines Wertes delta ist.

Ergibt sich dagegen im Schritt S22, daß der aktuelle Feldstärkewert kleiner gleich dem alten Feldstärkewert ist, so wird in Schritt S24 "last value" der aktuelle Feldstärkewert RSSI zugewiesen. Dies gilt auch, wenn nach Schritt S22 zu dem Schritt S23 übergegangen wurde. Im Anschluß an Anschluß an den Schritt S24 folgt der Schritt S25, der zurück zum Schritt S11 führt.

Ergibt sich bei dem Schritt S21 ein negatives Ergebnis (der aktuelle Feldstärkewert liegt unter dem vorliegenden Schwellwert), so wird im Schritt S3 die bisher aktivierte Antenne deaktiviert und eine andere Antenne aktiviert ("Antennenwechsel").

Im Schritt S4 wird dem Wert "change" der aktuelle Feldstärkewert zugewiesen. Im Schritt S5 erhält der Wert "last value" einen Maximalfeldstärkewert MAXRSSI. Diese Zuweisung ist erforderlich, damit in dem jeweils folgenden Ablauf der Schwellwert "threshold" nicht zweimal (S12,S23) verändert wird.

Der Schritt S6 führt zum Schritt S11 zurück.

Die dargestellten Schritte werden insbesondere durch ein Steuerungsprogramm realisiert, das dem zentralen Prozessor DECT-C (Fig. 1) zugeordnet ist.

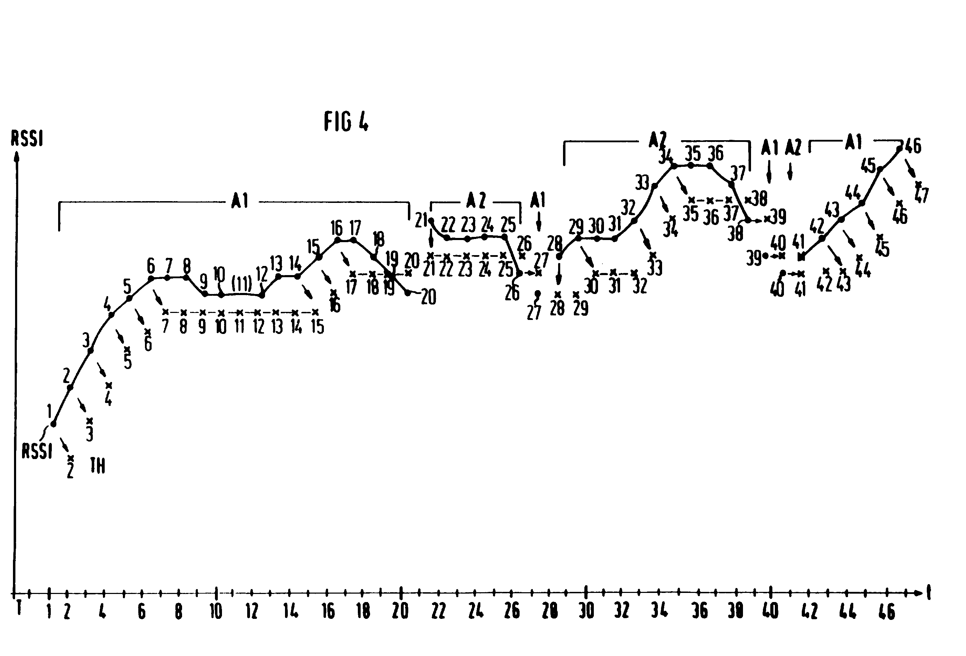

Dieses Steuerprogramm bzw. die entsprechende Hardwarestruktur mit Latches, Komparatoren und sonstigen Komponenten ist allgemein in der folgenden Weise ausgestaltet (vgl. Fig. 2 und 4): Während aufeinanderfolgender Zeiträume (T1,T2,T3) wird die Feldstärke (RSSI1,RSSI2,RSSI3) über die in diesen aufeinanderfolgenden Zeiträumen aufeinanderfolgend (T1,T2,T3) aktivierten Antennen (A1,A2) gemessen, und in Abhängigkeit an den in diesen aufeinanderfolgenden Zeiträumen (T1,T2) von den beiden Antennen (A1, A2) gemessenen Feldstärken (RSSI1,RSSI2) wird für den dem Meßzeitraum (T2) folgenden Zeitraum (T3) eine der Antennen (A1,A2) für den Empfang der Signale aktiviert.

Dabei ist vorgesehen, daß, sofern das im Meßzeitraum (T2) gemessene Feldstärkewert (RSSI2) größer als oder gleich dem im vorangegangenen Zeitraum (T1) gemessenen Feldstärkewert (RSSI1) ist, die im Meßzeitraum (T2) aktivierte Antenne (A1) für den dem Meßzeitraum (T2) folgenden Zeitraum (T3) aktiviert bleibt.

Das erfindungsgemäße Verfahren ist weiterhin dadurch gekennzeichnet, daß zu jedem gemessenen Feldstärkewert (RSSI1,RSSI2) ein Schwellwert (TH2,TH3) gebildet wird, und daß in Abhängigkeit des Schwellwerts (TH2) des dem Meßzeitraum (T2) vorangegangenen Zeitraums (T1) und in Abhängigkeit von dem im Meßzeitraum (T2) gemessenen Feldstärkewert (RSSI2) für den dem Meßzeitraum (T2) folgenden Zeitraum (T3) die eine oder andere Antenne (A1,A2) für den Empfang der Signale aktiviert wird.

In diesem Zusammenhang ist vorgesehen, daß der Schwellwert (TH2) mindestens in Abhängigkeit von dem Feldstärkewert (RSSI1), der in dem dem Meßzeitraum (T2) vorangegangenen Zeitraum (T1) gemessen worden ist, und in Abhängigkeit von dem im Meßzeitraum (T2) gemessenen Feldstärkewerts (RSSI2) gebildet wird.

Sofern der im Meßzeitraum, (z.B. T9) gemessene Feldstärkewert (RSSI9) kleiner als der Feldstärkewert (RSSI8) ist, der in dem, dem Meßzeitraum (T9) vorangegangenen Zeitraum (T8) gemessen worden ist, aber größer als der vorliegende Schwellwert (TH9) ist, wird der vorliegende Schwellwert (TH9) als neuer Schwellwert (TH10) übernommen.

Sofern der im Meßzeitraum (z.B. T20) gemessene Feldstärkewert (RSSI20) kleiner als der Feldstärkewert (RSSI19) ist, der in dem, dem Meßzeitraum (T20) vorangegangen Meßzeitraum (T19) gemessen worden ist und zugleich kleiner als der vorliegende Schwellwert (TH20) ist, wird die zuvor nicht aktivierte Antenne (A2) aktiviert.

Nach einem Antennenwechsel z.B. von Antenne (A1) zu Antenne (A2) zum Zeitpunkt (T20/T21) kann der Schwellwert (TH21) nach unterschiedlichen Regeln gebildet werden. Beispielsweise wird nach einem Antennenwechsel der erste Schwellwert TH21 als Maximum zweier Werte gebildet, von denen der erste Wert gleich dem Feldstärkewert RSSI20 ist, der als letzter Meßwert vor dem Antennenwechsel gemessen worden ist und von denen der zweite Wert gleich dem ersten nach dem Antennenwechsel gemessenen Feldstärkewert RSSI21 abzüglich eines vorgebbaren Betrages delta (Fig. 2) ist. Nach einer weiteren Regel wird der erste Schwellwert TH21 nach einem Antennenwechsel als arithmetisches Mittel zweier Werte gebildet, von denen der erste Wert das Produkt aus einem Faktor a und dem Feldstärkewert RSSI20 (letzter Meßwert vor dem Antennenwechsel) und von denen der zweite Wert das Produkt aus einem Faktor b mit dem Feldstärkewert RSSI21 (erster nach dem Antennenwechsel gemessener Feldstärkewert) ist. Die Summe der beiden Faktoren a und b ist beispielsweise gleich 2. Beispielsweise ist a=0,8 und b=1,2, so daß der zuletzt gemessene Feldstärkewert stärker berücksichtigt wird.

Fig. 3 veranschaulicht den Zusammenhang der Zeiträume, in denen Feldstärkewerte gemessen und Schwellwerte gebildet werden. Das Diagramm der Fig. 3 zeigt einen TDMA-Rahmen nach dem DECT-Standard. Dieser Rahmen hat eine Rahmenlänge von ca. 10 ms und besteht aus 24 Zeitkanälen 0...23, wobei die ersten 12 Zeitkanäle 0...11 Verbindungen von einer Basisstation zu Mobilteilen ("FT to PT" = "Fix to Portable") und die zweiten 12 Zeitkanäle 12...23 Verbindungen von den Mobilteilen zu der Basisstation ("PT to FT" = "Portable to Fix") dienen.

Jedem Zeitkanal 0...23 ist ein Zeitraum von 416,7 µs zugewiesen. Davon dienen 364,6 µs der Übertragung von 32 Synchronisierbits (Sync) und 398 Nutzdatenbits (Data). Die restliche Zeit von 416,7 µs - 364,6 µs ist eine sogenannte Guard-Zeit, die u.a. dazu dient, die Sende- bzw. Empfangseinrichtung TRANSC auf eine weitere im DECT-Standard vorgesehene Frequenz im Bereich 1880-1900 MHz einzustellen (Frequenz- und Zeitmultiplex).

Ein Duplexkanal zwischen der Basisstation und einem Mobilteil besteht beispielsweise aus dem Zeitkanal 0 (FT to PT) und dem Zeitkanal 12 (PT to FT). Der Zeitkanal 12 entspricht z.B. dem vorstehend genannten Zeitraum T1, in dem der Feldstärkewert RSSI1 gemessen wird. Im folgenden TDMA-Rahmen, wieder im Zeitkanal 12, der dem Zeitraum T2 entspricht und 10 ms nach dem Beginn des Zeitraums T1 beginnt, wird der folgende Feldstärkewert RSSI2 gemessen.

Die Bildung eines Schwellwertes kann allgemein nicht nur in Abhängigkeit von zwei Feldstärkewerten, sondern einer Mehrzahl von Feldstärkewerten erfolgen.

Fig. 4 zeigt den Zusammenhang zwischen den zu verschiedenen Zeitpunkten gemessenen Feldstärkewerten RSSI, den in Abhängigkeit dieser Feldstärkewerte RSSI gebildeten Schwellwerte TH und die entsprechende Aktivierung der Empfangsantennen A1,A2 des Systems. Dieser Zusammenhang ist für ausgewählte Feldstärke- und Schwellwerte durch Pfeile dargestellt.

Auf der Zeitachse t sind Zeiträume T1 bis T46 angegeben. In diesen Zeiträumen T1...T46 werden beispielsweise jeweils zu Beginn eines Zeitraums die Feldstärke des jeweils empfangenen Signals gebildet. Insbesondere in Abhängigkeit von dem gerade gemessenen und des zuvor gemessenen Feldstärkewert bildet der Schwellwertgenerator TH-G für den jeweils nächsten Zeitraum einen Schwellwert. Die Regeln für die Schwellwertbildung sind oben beschrieben. Im folgenden werden diese Zusammenhänge anhand des in Fig. 4 dargestellten konkreten Beispiels näher erläutert. Die zeitraumindividuellen Feldstärkewerte RSSI1...RSSI46 sind jeweils oberhalb der entsprechenden (Meß-) Punkte angegeben, während die zugehörigen Schwellwerte TH2...TH47 durch "x" dargestellt sind. Die entsprechenden Ziffern sind grundsätzlich unterhalb der "x" angegeben.

Es wird zunächst davon ausgegangen, daß die Antenne A1 aktiviert ist. In den Zeiträumen T1 bis einschließlich T5 werden jeweils nacheinander steigende Feldstärkewerte RSSI1...RSSI6 gemessen. Die Schwellwerte TH2...TH7 werden in entsprechender Weise nachgeführt, wobei der Schwellwert THn+1 jeweils um einen Betrag delta (Fig. 2, Schritte S12,S23) unterhalb des Schwellwerts RSSIn liegt.

In den Zeiträumen T6 und T7 wird jeweils eine konstante Feldstärke RSSI7,RSSI8 gemessen; in entsprechender Weise werden die Schwellwerte TH7 und TH8 gebildet. Die Antenne A1 bleibt weiter aktiviert.

Bei sinkender Feldstärke (T8-T9) bleibt der folgende Schwellwert TH10 (=TH9) konstant, da RSSI9 nicht unter TH9 abfällt. Die ursprüngliche Antenne A1 bleibt aktiviert.

Im folgenden (T10-T17) steigt die Feldstärke wieder, bzw. bleibt konstant, wobei die Schwellwerte wie schon beschrieben aktualisiert werden und die ursprüngliche Antenne A1 aktiviert bleibt. Sie bleibt zunächst auch im Zeitraum T18 aktiviert, da RSSI18 über TH18 liegt. Ebenso wird TH18 als TH19 übernommen.

Zu Beginn des Zeitraums T19 ist der gemessene Feldstärkewert RSSI19 gleich dem Schwellwert TH19. Im Anschluß daran fällt die Feldstärke RSSI20 unter den entsprechenden Schwellwert TH20. Das Unterschreiten der Feldstärke unter den jeweiligen Schwellwert führt zu dem Antennenwechsel von A1 zu A2 mit Beginn des Zeitraums T21.

Im folgenden sinkt die Feldstärke wiederum ab bzw. bleibt auf einem konstanten Wert bis sie nach dem Zeitpunkt T25 unter den Schwellwert fällt (RSSI26 < TH26). Dies führt zu dem Antennenwechsel A2/A1.

Der neue Schwellwert TH27 wird entsprechend Max(RSSI26, RSSI27-delta) gebildet.

Der dann als erster gemessene Feldstärkewert RSSI28 liegt über dem Schwellwert TH28, der entsprechend Max(RSSI27, RSSI28-delta) gebildet wird. Im Anschluß daran steigen die Feldstärkewerte bzw. bleiben konstant bis zum Zeitpunkt T36. Zu Beginn des Zeitraums T37 liegt RSSI37 über TH37, so daß die gerade aktivierte Antenne A2 aktiviert bleibt und der neue Schwellwert TH38 unverändert gegenüber dem Schwellwert TH37 bleibt. Zu Beginn des Zeitraums T38 liegt RSSI38 unter TH38, so daß die Antenne gewechselt wird (A2/A1). Zu Beginn des Zeitraums T39 liegt RSSI39 unter dem Schwellwert TH39, der wie der Schwellwert TH27 gebildet wird, so daß die Antenne wiederum gewechselt wird (A1/A2). Dies gilt auch für die Schwellwerte TH40 und TH41 und die entsprechenden Antennenwechsel.

Es ist allgemein festzustellen, daß durch die neue Festlegung des Schwellwertes nach einem Antennenwechsel sichergestellt wird, daß auch in dem Fall, in dem auf beiden Antennen A1,A2 relativ schlechte Übertragungsverhältnisse vorliegen, der Schwellwert überschritten wird.

Fig. 5 zeigt einen exemplarischen RSSI-Verlauf auf einer beliebigen Meßstrecke von n bis n +2,70 m, die das Mobilteil in Bezug auf die Basisstation zurücklegt, wobei die Meßstrecke in einem beliebigen Ausgangspunkt beginnt und sich in einer beliebigen Richtung über 2,70 m erstreckt.

Dabei sind die RSSI-Meßwerte auf den beiden Antennen einer erfindungsgemäßen Funkempfangseinrichtung (DECT-Basisstation) dünn hinterlegt und mit "1" bezeichnet. Diese Meßwerte erhält man durch einen besonderen Meßaufbau; im Normalbetrieb ist nur jeweils eine Antenne aktiviert.

Die im Fettdruck wiedergegebene Meßkurve, die mit "2" bezeichnet ist, veranschaulicht das Ergebnis des erfindungsgemäßen Verfahrens bei einer Bewegungsgeschwindigkeit (feste Basisstation, bewegtes Mobilteil) von ca. 0,7 m/s (Schrittgeschwindigkeit).

Fig. 5 veranschaulicht, daß der Empfang auf der jeweils günstigeren Antenne A1,A2 nahezu immer gewährleistet ist. Die horizontale Linie im oberen Bereich der Figur zeigt Zeiten, in denen die Antenne angeschaltet ist, die zu ungünstigeren Empfangsbedingungen führt.

## Patentansprüche

1. Verfahren zur Antennenauswahlsteuerung in einer Funkempfangseinrichtung, insbesondere der Basisstation (FT) oder des Mobilteils (PT) eines schnurlosen Telefons, mit einer Einrichtung (RSSI-C) zur Messung von ersten Feldstärkewerten (RSSI1...RSSI19, RSSI21...RSSI25, RSSI28...RSSI37, RSSI41...RSSI46) von über zwei Antennen (A1, A2) empfangenen Signalen,mit einem Schwellwertgenerator (TH-G) zur Bildung von ersten Schwellwerten (TH2...TH20, TH22...TH26, TH29...TH38, TH42...TH47) und mit einem zentralen Prozessor (DECT-C), der jeweils den an einer der beiden Antennen (A1, A2) jeweils gemessenen ersten Feldstärkewert mit dem jeweils gebildeten ersten Schwellwert vergleicht und der jeweils einen Nicht-Wechsel zu der jeweils anderen Antenne steuert, wenn der jeweils gemessene erste Feldstärkewert größer als der jeweils gebildete erste Schwellwert oder gleich dem jeweils gebildeten ersten Schwellwert ist,
**dadurch gekennzeichnet**, daß
der erste Schwellwert (TH2...TH20, TH22...TH26, TH29...TH38, TH42...TH47) jeweils derart gebildet wird, daß
a) der für einen ersten Feldstärkewert-/Schwellwert-Vergleich jeweils gebildete erste Schwellwert für einen nachfolgenden zweiten Feldstärkewert-/Schwellwert-Vergleich jeweils unverändert bleibt, wenn jeweils bei einem ersten Feldstärkewert-Vergleich zwischen einem jeweils aktuell gemessenen ersten Feldstärkewert (RSSI1...RSSI19, RSSI21...RSSI25, RSSI28...RSSI37, RSSI41...RSSI46) und einem jeweils zuletzt gemessenen ersten Feldstärkewert (0...RSSI18, RSSI20...RSSI24, RSSI27...RSSI36, RSSI40...RSSI45) der jeweils aktuell gemessene erste Feldstärkewert kleiner als der jeweils zuletzt gemessene erste Feldstärkewert oder gleich dem jeweils zuletzt gemessenen ersten Feldstärkewert ist, wobei jeweils für einen nachfolgenden zweiten Feldstärkewert-Vergleich der jeweils zuletzt gemessene erste Feldstärkewert durch den jeweils aktuell gemessenen ersten Feldstärkewert ersetzt wird,
b) der für einen ersten Feldstärkewert-/Schwellwert-Vergleich jeweils gebildete erste Schwellwert für einen nachfolgenden zweiten Feldstärkewert-/Schwellwert-Vergleich jeweils durch die Differenz zwischen einem jeweils aktuell gemessenen ersten Feldstärkewert (RSSI1...RSSI19, RSSI21...RSSI25, RSSI28...RSSI37, RSSI41...RSSI46) und einem Korrekturwert (delta) ersetzt wird, wenn jeweils bei einem ersten Feldstarkewert-Vergleich zwischen einem jeweils aktuell gemessenen ersten Feldstärkewert (RSSI1...RSSI19, RSSI21...RSSI25, RSSI28...RSSI37, RSSI41...RSSI46) und einem jeweils zuletzt gemessenen ersten Feldstärkewert (0...RSSI18, RSSI20...RSSI24, RSSI27...RSSI36, RSSI40...RSSI45) der jeweils aktuell gemessene erste Feldstärkewert größer als der jeweils zuletzt gemessene erste Feldstärkewert ist, wobei jeweils für einen nachfolgenden zweiten Feldstärkewert-Vergleich der jeweils zuletzt gemessene erste Feldstärkewert durch den jeweils aktuell gemessenen ersten Feldstärkewert ersetzt wird.

2. Verfahren nach Anspruch 1, **dadurch gekennzeichnet**, daß
a) mit der Einrichtung (RSSI-C) zweite Feldstärkewerte (RSSI20, RSSI26, RSSI27, RSSI38, RSSI39, RSSI40) gemessen werden, mit dem Schwellwertgenerator (TH-G) zweite Schwellwerte (TH21, TH27, TH28, TH39, TH40, TH41) gebildet werden und der zentrale Prozessor (DECT-C) jeweils einen Wechsel zu der jeweils anderen Antenne steuert, wenn der jeweils gemessene zweite Feldstärkewert kleiner als der jeweils gebildete zweite Schwellwert ist und
b) der zweite Schwellwert jeweils als Maximalwert aus der Differenz zwischen einem jeweils aktuell gemessenen zweiten Feldstärkewert (RSSI20, RSSI26, RSSI27, RSSI38, RSSI39, RSSI40) und einem Korrekturwert (delta) sowie einem jeweils zuletzt vor einem Antennenwechsel gemessenen zweiten Feldstärkewert (RSSI19, RSSI25, RSSI26, RSSI37, RSSI38, RSSI39) gebildet wird.

3. Verfahren nach Anspruch 2, **dadurch gekennzeichnet**, daß
der jeweils zuletzt gemessene zweite Feldstärkewert (RSSI19, RSSI25, RSSI26, RSSI37, RSSI38, RSSI39) nach einem Antennenwechsel jeweils durch einen maximalen Feldstärkewert (MAXRSSI) ersetzt wird.

4. Verfahren zur Antennenauswahlsteuerung in einer Funkempfangseinrichtung, insbesondere der Basisstation (FT) oder des Mobilteils (PT) eines schnurlosen Telefons, mit einer Einrichtung (RSSI-C) zur Messsung von ersten Feldstärkewerten (RSSI20, RSSI26, RSSI27, RSSI38, RSSI39, RSSI40) von über zwei Antennen (A1, A2) empfangenen Signalen, mit einem Schwellwertgenerator (TH-G) zur Bildung von ersten Schwellwerten (TH21, TH27, TH28, TH39, TH40, TH41) und mit einem zentralen Prozessor (DECT-C), der jeweils einen Wechsel von einer Antenne zu der jeweils anderen Antenne steuert, wenn der jeweils gemessene erste Feldstärkewert kleiner als der jeweils gebildete erste Schwellwert ist,
**dadurch gekennzeichnet**, daß
der erste Schwellwert (TH21, TH27, TH28, TH39, TH40, TH41) jeweils als Maximalwert aus der Differenz zwischen einem jeweils aktuell gemessenen ersten Feldstärkewert (RSSI20, RSSI26, RSSI27, RSSI38, RSSI39, RSSI40) und einem Korrekturwert (delta) sowie einem jeweils zuletzt vor einem Antennenwechsel gemessenen zweiten Feldstärkewert (RSSI19, RSSI25, RSSI26, RSSI37, RSSI38, RSSI39) gebildet wird.

5. Anordnung zur Antennenauswahlsteuerung in einer Funkempfangseinrichtung, insbesondere der Basisstation (FT) oder des Mobilteils (PT) eines schnurlosen Telefons, mit einer Einrichtung (RSSI-C) zur Messung von ersten Feldstärkewerten (RSSI1...RSSI19, RSSI21...RSSI25, RSSI28...RSSI37, RSSI41...RSSI46) von über zwei Antennen (Al, A2) empfangenen Signalen, mit einem Schwellwertgenerator (TH-G) zur Bildung von ersten Schwellwerten (TH2...TH20, TH22...TH26, TH29...TH38, TH42...TH47) und mit einem zentralen Prozessor (DECT-C), der jeweils den an einer der beiden Antennen (Al, A2) jeweils gemessenen ersten Feldstärkewert mit dem jeweils gebildeten ersten Schwellwert vergleicht und der jeweils einen Nicht-Wechsel zu der jeweils anderen Antenne steuert, wenn der jeweils gemessene erste Feldstärkewert größer als der jeweils gebildete erste Schwellwert oder gleich dem jeweils gebildeten ersten Schwellwert ist,
**dadurch gekennzeichnet**, daß dem zentralen Prozessor (DECT-C) zugeordnete Mittel vorgesehen sind, die zur Bildung des jeweiligen ersten Schwellwertes (TH2...TH20, TH22...TH26, TH29...TH38, TH42...TH47) derart ausgebildet sind, daß
a) der für einen ersten Feldstärkewert-/Schwellwert-Vergleich jeweils gebildete erste Schwellwert für einen nachfolgenden zweiten Feldstärkewert-/Schwellwert-Vergleich jeweils unverändert bleibt, wenn jeweils bei einem ersten Feldstärkewert-Vergleich zwischen einem jeweils aktuell gemessenen ersten Feldstärkewert (RSSI1...RSSI19, RSSI21...RSSI25, RSSI28...RSSI37, RSSI41...RSSI46) und einem jeweils zuletzt gemessenen ersten Feldstärkewert (0...RSSI18, RSSI20...RSSI24, RSSI27...RSSI36, RSSI40...RSSI45) der jeweils aktuell gemessene erste Feldstärkewert kleiner als der jeweils zuletzt gemessene erste Feldstärkewert oder gleich dem jeweils zuletzt gemessenen ersten Feldstärkewert ist, wobei jeweils für einen nachfolgenden zweiten Feldstärkewert-Vergleich der jeweils zuletzt gemessene erste Feldstärkewert durch den jeweils aktuell gemessenen ersten Feldstärkewert ersetzt wird,
b) der für einen ersten Feldstärkewert-/Schwellwert-Vergleich jeweils gebildete erste Schwellwert für einen nachfolgenden zweiten Feldstärkewert-/Schwellwert-Vergleich jeweils durch die Differenz zwischen einem jeweils aktuell gemessenen ersten Feldstärkewert (RSSI1...RSSI19, RSSI21...RSSI25, RSSI28...RSSI37, RSSI41...RSSI46) und einem Korrekturwert (delta) ersetzt wird, wenn jeweils bei einem ersten Feldstärkewert-Vergleich zwischen einem jeweils aktuell gemessenen ersten Feldstärkewert (RSSI1...RSSI19, RSSI21...RSSI25, RSSI28...RSSI37, RSSI41...RSSI46) und einem jeweils zuletzt gemessenen ersten Feldstärkewert (0...RSSI18, RSSI20...RSSI24, RSSI27...RSSI36, RSSI40...RSSI45) der jeweils aktuell gemessene erste Feldstärkewert größer als der jeweils zuletzt gemessene erste Feldstärkewert ist, wobei jeweils für einen nachfolgenden zweiten Feldstärkewert-Vergleich der jeweils zuletzt gemessene erste Feldstärkewert durch den jeweils aktuell gemessenen ersten Feldstärkewert ersetzt wird.

6. Anordnung zur Antennenauswahlsteuerung in einer Funkempfangseinrichtung, insbesondere der Basisstation (FT) oder des Mobilteils (PT) eines schnurlosen Telefons, mit einer Einrichtung (RSSI-C) zur Messung von ersten Feldstärkewerten (RSSI20, RSSI26, RSSI27, RSSI38, RSSI39, RSSI40) von über zwei Antennen (Al, A2) empfangenen Signalen, mit einem Schwellwertgenerator (TH-G) zur Bildung von ersten Schwellwerten (TH21, TH27, TH28, TH39, TH40, TH41) und mit einem zentralen Prozessor (DECT-C), der jeweils einen Wechsel von einer Antenne zu der jeweils anderen Antenne steuert, wenn der jeweils gemessene erste Feldstärkewert kleiner als der jeweils gebildete erste Schwellwert ist,
**dadurch gekennzeichnet**, daß dem zentralen Prozessor (DECT-C) zugeordnete Mittel vorgesehen sind, die derart ausgebildet sind, daß
der erste Schwellwert (TH21, TH27, TH28, TH39, TH40, TH41) jeweils als Maximalwert aus der Differenz zwischen einem jeweils aktuell gemessenen ersten Feldstarkewert (RSSI20, RSSI26, RSSI27, RSSI38, RSSI39, RSSI40) und einem Korrekturwert (delta) sowie einem jeweils zuletzt vor einem Antennenwechsel gemessenen ersten Feldstärkewert (RSSI19, RSSI25, RSSI26, RSSI37, RSSI38, RSSI39) gebildet wird.

7. Anordnung nach Anspruch 5 oder 6, **dadurch gekennzeichnet**, daß
der Schwellwertgenerator (TH-G) in dem zentralen Prozessor (DECT-C) integriert ist.

8. Anordnung nach einem der Ansprüche 5 bis 7, **dadurch gekennzeichnet**, daß die dem Prozessor (DECT-C) zugeordneten Mittel als Steuerprogramm (Softwaremittel) ausgebildet sind.

9. Anordnung nach einem der Ansprüche 5 bis 7, **dadurch gekennzeichnet**, daß die dem Prozessor (DECT-C) zugeordneten Mittel als Hardwaremittel (z. B. Komparatoren, Latches, etc.) ausgebildet sind.

10. Anordnung nach Anspruch 5, **dadurch gekennzeichnet**, daß die dem Prozessor (DECT-C) zugeordneten Mittel derart ausgebildet sind, daß die in den Ansprüchen 2 und/oder 3 angegebenen Verfahrensschritte durchgeführt werden.

## Claims

1. Method for controlling antenna selection in a radio receiver, in particular the base station (FT) or the mobile unit (PT) of a cordless telephone, having a device (RSSI-C) for measuring first field strength values (RSSI1,..RSSI19, RSSI21...RSSI25, RSSI28...RSSI37, RSSI41...RSSI46) of signals received via two antennas (A1, A2), having a threshold value generator (TH-G) for forming first threshold values (TH2...TH20, TH22...TH26, TH29...TH38, TH42...TH47) and having a central processor (DECT-C) which in each case compares the first field strength value respectively measured at one of the two antennas (A1, A2) with the respectively formed first threshold value and controls the in each case one non-change to the respective other antenna when the respectively measured first field strength value is larger than the respectively formed first threshold value or equal to the respectively formed first threshold value, characterized in that the first threshold value (TH2...TH20, TH22...TH26, TH29...TH38, TH42...TH47) is formed in each case in such a way that
a) the first threshold value, respectively formed for a first field strength value/threshold value comparison, remains unchanged in each case for a subsequent second field strength value/threshold value comparison when in the case respectively of a first field strength value comparison between a respectively currently measured first field strength value (RSSI1...RSSI19, RSSI21...RSSI25, RSSI28...RSSI37, RSSI41...RSSI46) and a respectively lastly measured first field strength value (0...RSSI18, RSSI20...RSSI24, RSSI27...RSSI36, RSSI40...RSSI45) the respectively currently measured first field strength value is smaller than the respectively lastly measured first field strength value or equal to the respectively lastly measured first field strength value, the respectively lastly measured first field strength value being replaced respectively for a subsequent second field strength value comparison by the respectively currently measured first field strength value,
b) the first threshold value, respectively formed for a first field strength value/threshold value comparison, is respectively replaced by the difference between a respectively currently measured first field strength value (RSSI1...RSSI19, RSSI21...RSSI25, RSSI28...RSSI37, RSSI41...RSSI46) and a correction value (delta) for a subsequent second field strength value/threshold value comparison when in the case respectively of a first field strength value comparison between a respectively currently measured first field strength value (RSSI1...RSSI19, RSSI21...RSSI25, RSSI28...RSSI37, RSSI41...RSSI46) and a respectively lastly measured first field strength value (0...RSSI18, RSSI20...RSSI24, RSSI27...RSSI36, RSSI40...RSSI45) a respectively currently measured first field strength value is larger than the respectively lastly measured first field strength value, the respectively lastly measured first field strength value being replaced respectively for a subsequent second field strength value comparison by the respectively currently measured first field strength value.

2. Method according to Claim 1, characterized in that
a) the device (RSSI-C) is used to measure second field strength values (RSSI20, RSSI26, RSSI27, RSSI38, RSSI39, RSSI40), the threshold value generator (TH-G) is used to form second threshold values (TH21, TH27, TH28, TH39, TH40, TH41), and the central processor (DECT-C) respectively controls a change to the respective other antenna when the respectively measured second field strength value is smaller than the respectively formed second threshold value, and
b) the second threshold value is respectively formed as maximum value from the difference between a respectively currently measured second field strength value (RSSI20, RSSI26, RSSI27, RSSI38, RSSI39, RSSI40) and a correction value (delta) as well as a second field strength value (RSSI19, RSSI25, RSSI26, RSSI37, RSSI38, RSSI39) respectively last measured before an antenna change.

3. Method according to Claim 2, characterized in that after an antenna change the respectively lastly measured second field strength value (RSSI19, RSSI25, RSSI26, RSSI37, RSSI38, RSSI39) is respectively replaced by a maximum field strength value (MAXRSSI).

4. Method for controlling antenna selection in a radio receiver, in particular the base station (FT) or the mobile unit (PT) of a cordless telephone, having a device (RSSI-C) for measuring first field strength values (RSSI20, RSSI26, RSSI27, RSSI38, RSSI39, RSSI40) of signals received via two antennas (Al, A2), having a threshold value generator (TH-G) for forming first threshold values (TH21, TH27, TH28, TH39, TH40, TH41) and having a central processor (DECT-C) which in each case controls a change from one antenna to the respective other antenna when the respectively measured first field strength value is smaller than the respectively formed first threshold value, characterized in that the first threshold value (TH21, TH27, TH28, TH39, TH40, TH41) is formed in each case as maximum value from the difference between a respectively currently measured first field strength value (RSSI20, RSSI26, RSSI27, RSSI38, RSSI39, RSSI40) and a correction value (delta) as well as a second field strength value (RSSI19, RSSI25, RSSI26, RSSI37, RSSI38, RSSI39) respectively lastly measured before an antenna change.

5. Arrangement for controlling antenna selection in a radio receiver, in particular the base station (FT) or the mobile unit (PT) of a cordless telephone, having a device (RSSI-C) for measuring first field strength values (RSSI1...RSSI19, RSSI21...RSSI25, RSSI28...RSSI37, RSSI41...RSSI46) of signals received via two antennas (Al, A2), having a threshold value generator (TH-G) for forming first threshold values (TH2...TH20, TH22...TH26, TH29...TH38, TH42...TH47) and having a central processor (DECT-C) which in each case compares the first field strength value respectively measured at one of the two antennas (A1, A2) with the respectively formed first threshold value and controls the in each case one non-change to the respective other antenna when the respectively measured first field strength value is larger than the respectively formed first threshold value or equal to the respectively formed first threshold value, characterized in that means assigned to the central processor (DECT-C) are provided which are constructed for the purpose of forming the respective first threshold value (TH2...TH20, TH22...TH26, TH29...TH38, TH42...TH47) in such a way that
a) the first threshold value, respectively formed for a first field strength value/threshold value comparison, remains unchanged in each case for a subsequent second field strength value/threshold value comparison when in the case respectively of a first field strength value comparison between a respectively currently measured first field strength value (RSSI1...RSSI19, RSSI21...RSSI25, RSSI28...RSSI37, RSSI41...RSSI46) and a respectively lastly measured first field strength value (0...RSSI18, RSSI20...RSSI24, RSSI27...RSSI36, RSSI40...RSSI45) the respectively currently measured first field strength value is smaller than the respectively lastly measured first field strength value or equal to the respectively lastly measured first field strength value, the respectively lastly measured first field strength value being replaced respectively for a subsequent second field strength value comparison by the respectively currently measured first field strength value,
b) the first threshold value, respectively formed for a first field strength value/threshold value comparison, is respectively replaced by the difference between a respectively currently measured first field strength value (RSSI1...RSSI19, RSSI21...RSSI25, RSSI28...RSSI37, RSSI41...RSSI46) and a correction value (delta) for a subsequent second field strength value/threshold value comparison when in the case respectively of a first field strength value comparison between a respectively currently measured first field strength value (RSSI1...RSSI19, RSSI21...RSSI25, RSSI28...RSSI37, RSSI41...RSSI46) and a respectively lastly measured first field strength value (0...RSSI18, RSSI20...RSSI24, RSSI27...RSSI36, RSSI40...RSSI4S) the respectively currently measured first field strength value is larger than the respectively lastly measured first field strength value, the respectively lastly measured first field strength value being replaced respectively for a subsequent second field strength value comparison by the respectively currently measured first field strength value.

6. Arrangement for controlling antenna selection in a radio receiver, in particular the base station (FT) or the mobile unit (PT) of a cordless telephone, having a device (RSSI-C) for measuring first field strength values (RSSI20, RSSI26, RSSI27, RSSI38, RSSI39, RSSI40) of signals received via two antennas (A1, A2), having a threshold value generator (TH-G) for forming first threshold values (TH21, TH27, TH28, TH39, TH40, TH41) and having a central processor (DECT-C) which in each case controls a change from one antenna to the respective other antenna when the respectively measured first field strength value is smaller than the respectively formed first threshold value, characterized in that means assigned to the central processor (DECT-C) are provided which are constructed such that the first threshold value (TH21, TH27, TH28, TH39, TH40, TH41) is formed in each case as maximum value from the difference between a respectively currently measured first field strength value (RSSI20, RSSI26, RSSI27, RSSI38, RSSI39, RSSI40) and a correction value (delta) as well as a first field strength value (RSSI19, RSSI25, RSSI26, RSSI37, RSSI38, RSSI39) respectively lastly measured before an antenna change.

7. Arrangement according to Claim 5 or 6, characterized in that the threshold value generator (TH-G) is integrated in the central processor (DECT-C).

8. Arrangement according to one of Claims 5 to 7, characterized in that the means assiged to the processor (DECT-C) are constructed as a control program (software means).

9. Arrangement according to one of Claims 5 to 7, characterized in that the means assigned to the processor (DECT-C) are constructed as hardware means (for example, comparators, latches, etc.).

10. Arrangement according to Claim 5, characterized in that the means assigned to the processor (DECT-C) are constructed in such a way that the method steps specified in Claims 2 and/or 3 are carried out.

## Revendications

1. Procédé pour la commande de sélection d'antenne dans un dispositif de réception radio, notamment de la station de base (FT) ou de la partie mobile (PT) d'un téléphone sans fil, comprenant un dispositif (RSSI-C) pour la mesure de premières valeurs d'intensités de champ (RSSI1 à RSSI19, RSSI21 à RSSI25, RSSI28 à RSSI37, RSSI41 à RSSI46) de signaux reçus par l'intermédiaire de deux antennes (A1, A2), un générateur de valeurs de seuil (TH-G) pour la formation de premières valeurs de seuil (TH2 à TH20, TH22 à TH26, TH29 à TH38, TH42 à TH47) et un processeur central (DECT-C) qui compare la première valeur d'intensité de champ mesurée respectivement sur une des deux antennes (A1, A2) à la première valeur de seuil formée respectivement et qui commande un non-changement vers l'autre antenne si la première valeur d'intensité de champ mesurée est supérieure ou égale à la première valeur de seuil formée,
caractérisé par le fait que
l'on forme la première valeur de seuil (TH2 à TH20, TH22 à TH26, TH29 à TH38, TH42 à TH47) de telle sorte que
a) la première valeur de seuil formée pour une première comparaison valeur d'intensité de champ/valeur de seuil reste inchangée pour une deuxième comparaison consécutive valeur d'intensité de champ/valeur de seuil si, lors d'une première comparaison de valeur d'intensité de champ entre une première valeur d'intensité de champ mesurée actuellement (RSSI1 à RSSI19, RSSI21 à RSSI25, RSSI28 à RSSI37, RSSI41 à RSSI46) et une première valeur d'intensité de champ mesurée en dernier (0 à RSSI18, RSSI20 à RSSI24, RSSI27 à RSSI36, RSSI40 à RSSI45), la première valeur d'intensité de champ mesurée actuellement est inférieure ou égale à la première valeur d'intensité de champ mesurée en dernier, sachant qu'à chaque fois, pour une deuxième comparaison consécutive de valeur d'intensité de champ, la première valeur d'intensité de champ mesurée en dernier est remplacée par la première valeur d'intensité de champ mesurée actuellement,
b) la première valeur de seuil formée pour une première comparaison valeur d'intensité de champ/valeur de seuil est remplacée pour une deuxième comparaison consécutive valeur d'intensité de champ/valeur de seuil par la différence entre une première valeur d'intensité de champ mesurée actuellement (RSSI1 à RSSI19, RSSI21 à RSSI25, RSSI28 à RSSI37, RSSI41 à RSSI46) et une valeur de correction (delta) si, lors d'une première comparaison de valeur d'intensité de champ entre une première valeur d'intensité de champ mesurée actuellement (RSSI1 à RSSI19, RSSI21 à RSSI25, RSSI28 à RSSI37, RSSI41 à RSSI46) et une première valeur d'intensité de champ mesurée en dernier (0 à RSSI18, RSSI20 à RSSI24, RSSI27 à RSSI36, RSSI40 à RSSI45), la première valeur d'intensité de champ mesurée actuellement est supérieure à la première valeur d'intensité de champ mesurée en dernier, sachant qu'à chaque fois, pour une deuxième comparaison consécutive de valeur d'intensité de champ la première valeur d'intensité de champ mesurée en dernier est remplacée par la première valeur d'intensité de champ mesurée actuellement.

2. Procédé selon la revendication 1, caractérisé par le fait que
a) l'on mesure avec le dispositif (RSSI-C) des deuxièmes valeurs d'intensités de champ (RSSI20, RSSI26, RSSI27, RSSI38, RSSI39, RSSI40), on forme avec le générateur de valeurs de seuil (TH-G) des deuxièmes valeurs de seuil (TH21, TH27, TH28, TH39, TH40, TH41) et le processeur central (DECT-C) commande à chaque fois un changement vers l'autre antenne si la deuxième valeur d'intensité de champ mesurée est inférieure à la deuxième valeur de seuil formée, et que
b) l'on forme la deuxième valeur de seuil comme étant la valeur maximale entre la différence d'une deuxième valeur d'intensité de champ mesurée actuellement (RSSI20, RSSI26, RSSI27, RSSI38, RSSI39, RSSI40) et d'une valeur de correction (delta) et une deuxième valeur d'intensité de champ mesurée en dernier avant un changement d'antenne (RSSI19, RSSI25, RSSI26, RSSI37, RSSI38, RSSI39).

3. Procédé selon la revendication 2, caractérisé par le fait que
la deuxième valeur d'intensité de champ mesurée en dernier (RSSI19, RSSI25, RSSI26, RSSI37, RSSI38, RSSI39) est remplacée après un changement d'antenne par une valeur d'intensité de champ maximale (MAXRSSI).

4. Procédé pour la commande de sélection d'antenne dans un dispositif de réception radio, notamment de la station de base (FT) ou de la partie mobile (PT) d'un téléphone sans fil, comprenant un dispositif (RSSI-C) pour la mesure de premières valeurs d'intensités de champ (RSSI20, RSSI26, RSSI27, RSSI38, RSSI39, RSSI40) de signaux reçus par l'intermédiaire de deux antennes (A1, A2), un générateur de valeurs de seuil (TH-G) pour la formation de premières valeurs de seuil (TH21, TH27, TH28, TH39, TH40, TH41) et un processeur central (DECT-C) qui commande à chaque fois un changement d'une antenne à l'autre antenne si la première valeur d'intensité de champ mesurée est inférieure à la première valeur de seuil formée,
caractérisé par le fait que
l'on forme la première valeur de seuil (TH21, TH27, TH28, TH39, TH40, TH41) comme étant la valeur maximale entre la différence d'une première valeur d'intensité de champ mesurée actuellement (RSSI20, RSSI26, RSSI27, RSSI38, RSSI39, RSSI40) et d'une valeur de correction (delta) et une deuxième valeur d'intensité de champ mesurée en dernier avant un changement d'antenne (RSSI19, RSSI25, RSSI26, RSSI37, RSSI38, RSSI39).

5. Dispositif pour la commande de sélection d'antenne dans un dispositif de réception radio, notamment de la station de base (FT) ou de la partie mobile (PT) d'un téléphone sans fil, comprenant un dispositif (RSSI-C) pour la mesure de premières valeurs d'intensités de champ (RSSI1 à RSSI19, RSSI21 à RSSI25, RSSI28 à RSSI37, RSSI41 à RSSI46) de signaux reçus par l'intermédiaire de deux antennes (A1, A2), un générateur de valeurs de seuil (TH-G) pour la formation de premières valeurs de seuil (TH2 à TH20, TH22 à TH26, TH29 à TH38, TH42 à TH47) et un processeur central (DECT-C) qui compare la première valeur d'intensité de champ mesurée respectivement sur une des deux antennes (A1, A2) à la première valeur de seuil formée respectivement et qui commande un non-changement vers l'autre antenne si la première valeur d'intensité de champ mesurée est supérieure ou égale à la première valeur de seuil formée,
caractérisé par le fait qu'il est prévu des moyens qui sont associés au processeur central (DECT-C) et qui sont conçus pour la formation de la première valeur de seuil (TH2 à TH20, TH22 à TH26, TH29 à TH38, TH42 à TH47) de telle sorte que
a) la première valeur de seuil formée pour une première comparaison valeur d'intensité de champ/valeur de seuil reste inchangée pour une deuxième comparaison consécutive valeur d'intensité de champ/valeur de seuil si, lors d'une première comparaison de valeur d'intensité de champ entre une première valeur d'intensité de champ mesurée actuellement (RSSI1 à RSSI19, RSSI21 à RSSI25, RSSI28 à RSSI37, RSSI41 à RSSI46) et une première valeur d'intensité de champ mesurée en dernier (0 à RSSI18, RSSI20 à RSSI24, RSSI27 à RSSI36, RSSI40 à RSSI45), la première valeur d'intensité de champ mesurée actuellement est inférieure ou égale à la première valeur d'intensité de champ mesurée en dernier, sachant qu'à chaque fois, pour une deuxième comparaison consécutive de valeur d'intensité de champ, la première valeur d'intensité de champ mesurée en dernier est remplacée par la première valeur d'intensité de champ mesurée actuellement,
b) la première valeur de seuil formée pour une première comparaison valeur d'intensité de champ/valeur de seuil est remplacée pour une deuxième comparaison consécutive valeur d'intensité de champ/valeur de seuil par la différence entre une première valeur d'intensité de champ mesurée actuellement (RSSI1 à RSSI19, RSSI21 à RSSI25, RSSI28 à RSSI37, RSSI41 à RSSI46) et une valeur de correction (delta) si, lors d'une première comparaison de valeur d'intensité de champ entre une première valeur d'intensité de champ mesurée actuellement (RSSI1 à RSSI19, RSSI21 à RSSI25, RSSI28 à RSSI37, RSSI41 à RSSI46) et une première valeur d'intensité de champ mesurée en dernier (0 à RSSI18, RSSI20 à RSSI24, RSSI27 à RSSI36, RSSI40 à RSSI45), la première valeur d'intensité de champ mesurée actuellement est supérieure à la première valeur d'intensité de champ mesurée en dernier, sachant qu'à chaque fois, pour une deuxième comparaison consécutive de valeur d'intensité de champ la première valeur d'intensité de champ mesurée en dernier est remplacée par la première valeur d'intensité de champ mesurée actuellement.

6. Dispositif pour la commande de sélection d'antenne dans un dispositif de réception radio, notamment de la station de base (FT) ou de la partie mobile (PT) d'un téléphone sans fil, comprenant un dispositif (RSSI-C) pour la mesure de premières valeurs d'intensités de champ (RSSI20, RSSI26, RSSI27, RSSI38, RSSI39, RSSI40) de signaux reçus par l'intermédiaire de deux antennes (A1, A2), un générateur de valeurs de seuil (TH-G) pour la formation de premières valeurs de seuil (TH21, TH27, TH28, TH39, TH40, TH41) et un processeur central (DECT-C) qui commande à chaque fois un changement d'une antenne à l'autre antenne si la première valeur d'intensité de champ mesurée est inférieure à la première valeur de seuil formée,
caractérisé par le fait qu'il est prévu des moyens qui sont associés au processeur central (DECT-C) et qui sont conçus de telle sorte que
la première valeur de seuil (TH21, TH27, TH28, TH39, TH40, TH41) est formée comme étant la valeur maximale entre la différence d'une première valeur d'intensité de champ mesurée actuellement (RSSI20, RSSI26, RSSI27, RSSI38, RSSI39, RSSI40) et d'une valeur de correction (delta) et une première valeur d'intensité de champ mesurée en dernier avant un changement d'antenne (RSSI19, RSSI25, RSSI26, RSSI37, RSSI38, RSSI39).

7. Dispositif selon la revendication 5 ou 6, caractérisé par le fait que le générateur de valeurs de seuil (TH-G) est intégré dans le processeur central (DECT-C).

8. Dispositif selon l'une des revendications 5 à 7, caractérisé par le fait que les moyens associés au processeur (DECT-C) sont conçus sous forme de programmes de commande (moyens logiciels).

9. Dispositif selon l'une des revendications 5 à 7, caractérisé par le fait que les moyens associés au processeur (DECT-C) sont conçus sous forme de moyens matériels (par exemple des comparateurs, des circuits de verrouillage, etc.).

10. Dispositif selon la revendication 5, caractérisé par le fait que les moyens associés au processeur (DECT-C) sont conçus de manière à mettre en oeuvre les étapes du procédé données dans les revendications 2 et/ou 3.
